(19) Europäisches Patentamt
European Patent Office
Office européen des brevets

(11) Veröffentlichungsnummer: **0 443 125 A1**

(12) # EUROPÄISCHE PATENTANMELDUNG

(21) Anmeldenummer: **90123381.7**

(22) Anmeldetag: **06.12.90**

(51) Int. Cl.5: **C08L 81/02**, C08K 5/3415, C08K 3/30, C08K 3/20

(30) Priorität: **30.01.90 DE 4002604**

(43) Veröffentlichungstag der Anmeldung: **28.08.91 Patentblatt 91/35**

(84) Benannte Vertragsstaaten: **BE DE FR GB IT**

(71) Anmelder: **BAYER AG**

**W-5090 Leverkusen 1 Bayerwerk(DE)**

(72) Erfinder: **Wehnert, Wolfgang, Dr.**
**Bodelschwinghstrasse 14**
**W-4150 Krefeld 1(DE)**
Erfinder: **Jentsch, Michael**
**Krefelder Strasse 42**
**W-4150 Krefeld-Hüls(DE)**
Erfinder: **Kreuder, Manfred, Dr.**
**Deswatinesstrasse 71**
**W-4150 Krefeld 1(DE)**
Erfinder: **Rempel, Dieter, Dr.**
**Max-Beckmann-Strasse 35**
**W-5090 Leverkusen 1(DE)**

(54) **Mischungen aus Polyarylensulfiden, Metallsalzen, Glasfasern und Maleinimiden.**

(57) Die Erfindung betrifft Mischungen aus Polyarylensulfiden, Metallsalzen, Maleinimiden, Glasfasern und gegebenenfalls anderen Zusätzen. Die Mischungen zeichnen sich durch gute mechanische Eigenschaften aus.

EP 0 443 125 A1

## MISCHUNGEN AUS POLYARYLENSULFIDEN, METALLSALZEN, GLASFASERN UND MALEINIMIDEN

Die Erfindung betrifft Mischungen aus Polyarylensulfiden, Maleinimiden, Metallsalzen, Glasfasern und gegebenenfalls weiteren Zusätzen. Die Mischungen zeichnen sich durch ihre Helligkeit und gute mechanische Eigenschaften aus.

Polyarylensulfide (PAS) sind bekannt (z.B. US-PS 3 354 129, EP 17 10 21). Sie sind inerte, hochtemperaturbeständige Thermoplaste, die einen hohen Füllgrad, z.B. mit Glasfasern und/oder anderen anorganischen Füllstoffen erlauben. Der Einsatz dieser Polymeren, insbesondere des Polyphenylensulfids (PPS) nimmt in Bereichen zu, die bislang Duroplasten vorbehalten waren.

PPS hat mechanische Eigenschaften, die für einige Anwendungen, z.B. im Spritzgußbereich, unzureichend sind. Insbesondere sind Biege- oder Zugfestigkeit, Randfaserdehnung, Schlagzähigkeit und Elastizitätsmodul für die Praxis häufig nicht ausreichend. Es hat sich daher als Vorteil erwiesen, PPS z.B. durch Abmischung mit anderen Thermoplasten, z.B. mit Polycarbonaten in den genannten Eigenschaften zu verbessern (z.B. JP-A 51-59952, EP-A 104 543, US-A 4 021 596, EP-A 331 965).

Für bestimmte Anwendungsgebiete ist das Eigenschaftsprofil derartiger Abmischungen jedoch nicht immer ganz befriedigend.

Es ist bekannt, daß PPS sich durch Abmischung mit Maleinimiden in seinen Eigenschaften modifizieren läßt. Meist wird dabei eine Verzweigung von PPS bewirkt, da z.B. PPS unter oxidativen Bedingungen mit Maleinimiden umgesetzt wird (JP-A 021 876) oder PPS mit Verbindungen umgesetzt wird, die mindestens drei Maleinimidgruppen und einen Triazinring enthalten (z.B. JP-A 202 162, EP-A 105 639).

Wünschenswert wäre es jedoch, die Eigenschaften von unverzweigtem Polyarylensulfid durch solche Additive anzuheben, die nicht vernetzend auf das Polymer einwirken.

Es wurde nun gefunden, daß Abmischungen von Polyarylensulfiden (PAS), vorzugsweise von Polyphenylensulfid (PPS) mit geringen Mengen an Maleinimiden, Metallsalzen, Glasfasern und gegebenenfalls weiteren Zusätzen sich durch ihre helle Farbe, mechanischen Eigenschaften, z.B. Zähigkeit, Biegefestigkeit, Randfaserdehnung usw. besonders auszeichnen.

Gegenstand der Erfindung sind daher Mischungen aus

A) 90 bis 20 Gew.-%, bevorzugt

80 bin 30 Gew.-% unverzweigten, sulfongruppenfreien Polyarylensulfiden, bevorzugt PPS,

B) 0,1 bis 20 Gew.-%, bevorzugt

0,3 bis 5 Gew.-% eines Maleinimids der Formel (I) und/oder (II), vorzugsweise der Formel (I),

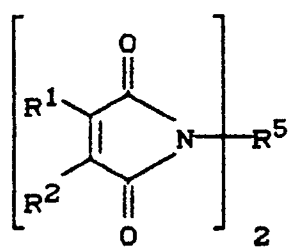 (I),

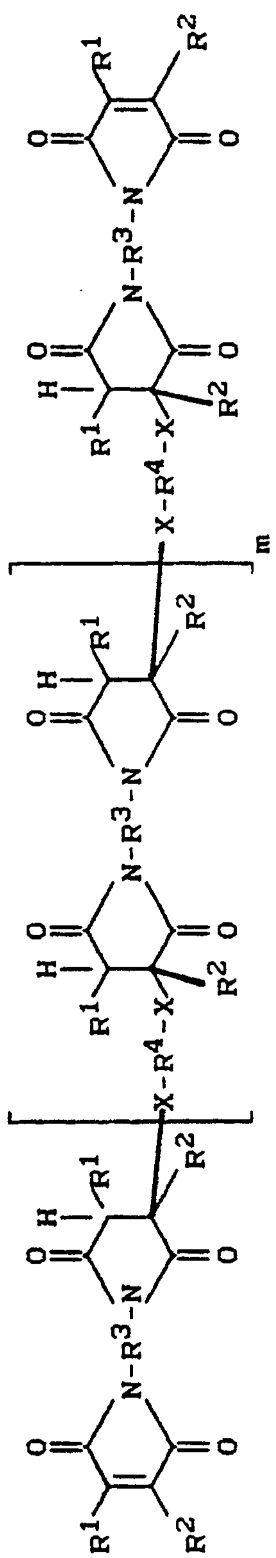

(II),

wobei

R[1] und R[2] gleich oder verschieden sein können und Wasserstoff, $C_1$-$C_{22}$-Alkyl, bevorzugt Methyl, $C_6$-$C_{14}$-Aryl, bevorzugt Phenyl oder $C_7$-$C_{22}$-Aralkyl oder $C_7$-$C_{22}$-Alkylaryl, besonders bevorzugt Wasserstoff bedeuten,

R[3], R[4] und R[5] unabhängig voneinander divalente Reste, mit 1 bis 38 aliphatischen C-Atomen sind, die gegebenenfalls auch in Ringen angeordnet sein können und/oder divalente aromatische Reste mit 6 bis 24-C-Atomen sind und/oder divalente aromatisch-aliphatische und/oder aliphatisch-aromatische Reste mit 7 bis 40 C-Atomen sind wobei gegebenenfalls zwei oder mehr aromatische, aliphatische Ringe durch eine chemische Bindung, ein Sauerstoffatom, ein Schwefelatom, eine Carbonylgruppe und/oder eine Sulfongruppe verknüpft sein können,

und

X für -NH oder $C_1$-$C_{10}$-N-Alkyl steht,

m für eine Zahl von 0 bis 1000, vorzugsweise 0 bis 10 steht,

C) 0,3 - 40 Gew.-%, vorzugsweise 0,9 - 34,9 Gew.-%, besonders bevorzugt 5 - 25 Gew.-%, Metallsalze,

D) 5 - 50 Gew.-%, vorzugsweise 9 - 40 Gew.-% Glasfasern und gegebenenfalls

E) 0,01 - 40 Gew.-% bezogen auf die Summe (A+B+C+D) weitere Zusatzstoffe.

Beispiele für erfindungsgemäße Stoffe der Formel (I) sind 1,6-Bis-(maleinimido)-hexan, 1,4-Bis-(maleinimido)-cyclohexan, 1,4-Bis-(maleinimido)-benzol, 4,4'-Bis-(maleinimido)-biphenyl, Bin-(4-maleinimidophenyl)-methan, 2,2-Bis-(4-maleinimidophenyl)-propan, 1,3-Bis-(maleinimido)-cyclohexan,1,5-Bis-(maleinimido)-naphthalin, 1,3-Bis-(maleinimido)-benzol, Bis-(maleinimido)-methan, 1,2-Bis-(maleinimido)-ethan, Di-(4-maleinimidophenyl)sulfon, Di-(3-maleinimidophenyl)sulfon, 4,4'-Bis-(maleinimido)-benzophenon, 3,3'-Bis-(Maleinimido)-benzophenon, 4,4'-Bis-(maleinimido)-diphenylether, 4,4'-Bis-(maleinimido)-diphenylsulfid usw.

Beispiele für erfindungsgemäße Stoffe der Formel (II) sind oligomere oder polymere Michaeladditionsprodukte von Bis-(4-maleinimido)-methan mit Diaminen, z.B. Bis-(4-aminophenyl)methan oder Hexamethylendiamin u.s.w.

Die erfindungsgemäßen Maleinimide können aus Maleinsäureanhydrid und Amin z.B. analog GB-A 1 137 592 hergestellt werden.

Als Metallsalze werden erfindungsgemäß verwendet Metalloxide und -sulfide vorzugsweise Zinksalze wie ZnO, ZnS, Lithopone, CdS, $MoS_2$ oder Sulfate, z.B. $CaSO_4$, $BaSO_4$, Carbonate wie $CaCO_3$, Dolomit.

Besonders bevorzugt ist Zinksulfid (ZnS).

Die Metallsalze können gegebenenfalls E) mit 0,01 bis 40 Gew.-% bezogen auf die Summe (A+B+C+D) und anderen mineralischen Füllstoffen wie Talkum, Glimmer, Dolomit, Anhydrit, Ruß, Graphit usw. abgemischt sein.

Erfindungsgemäß können z.B. handelsübliche, gegebenenfalls auf übliche Art geschlichtete Glasfasern eingesetzt. Sie haben einen Durchmesser von 1 bis 20 $\mu$m, bevorzugt 5 bis 13 $\mu$m. Es können auch Endlosfasern eingesetzt werden und/oder Herstellungsverfahren gewählt werden, bei denen die Länge der Fasern in der fertigen erfindungsgemäßen Abmischung dann 0,05 bis 10, bevorzugt 0,1 bis 2 mm beträgt. Es können auch Endlosfasern (Rovings) eingesetzt werden in Verfahren zur Herstellung von endlosverstärktem Unidirektionalverbund.

Gegebenenfalls können auch anstelle der Glasfasern handelsübliche Glaskugeln eingesetzt werden, z.B. Ballotini-Glaskugeln. Diese können auch bevorzugt in Mischung mit Glasfasern als weitere mineralische Füllstoffe dienen.

Als weitere übliche Zusatzstoffe können Pigmente, Entformungsmittel, E-Wachse, Fließhilfsmittel, Nucleierungsmittel oder Stabilisatoren eingesetzt werden.

Die erfindungsgemäßen Mischungen können auf übliche Art und Weise durch Extrusion hergestellt werden.

Die erfindungsgemäßen Mischungen können auf übliche Weise zu Formteilen, Halbzeug, Fasern, Folien, Profilen usw. verarbeitet werden. Die erfindungsgemäßen Mischungen können generell in vorteilhafter Weise dort eingesetzt werden, wo thermoplastisch verarbeitbare Massen eingesetzt werden.

Beispiele (1-4) und Vergleichsbeispiele (I und II)

Die Herstellung der erfindungsgemäßen Mischungen erfolgte auf einem Doppelwellenextruder ZSK 32 von Werner und Pfleiderer bei 320 °C.

Das verwendete PPS wies eine Schmelzviskosität von 45 Pa.s (310 °C), Schubspannung = 1.000 $s^{-1}$ auf und wurde nach EP-A 171 021 hergestellt.

Als Maleinimid (MI) wurde Bis-(4-maleinimidophenyl)-methan (z.B. Janssen Chimica) eingesetzt in den in Tabelle 1 verzeichneten Konzentrationen.

Als Glasfasern wurde gemäß Tabelle 1 die geschlichtete Schnittglasfaser Bayer CS 7916® zu 30 oder 40 Gew.-% eingesetzt.

Als Füllstoff und Metallsalz wurde das ZnS Sachtolith HD® der Fa. Sachtleben eingesetzt in den jeweils in Tabelle 1 angegebenen Konzentrationen.

Die Mischungen wurden granuliert und zu Prüfstäben (z.B. der Maße 80 x 10 x 4 mm) verspritzt. Diese wurden hinsichtlich Biegefestigkeit, Randfaserdehnung, Biege-E-Modul und Schlagzähigkeit $a_n$ (reversed notched ISO 180) untersucht.

**Tabelle 1** Zusammensetzung und Eigenschaften der PPS-Mischungen

| Beispiele | | Beispiel Nr. 1 | 2 | 3 | 4 | Vergleichsbeispiel Nr. I | II |
|---|---|---|---|---|---|---|---|
| PPS | Gew.-% | 56,3 | 49,3 | 39,3 | 39,3 | 59,3 | 50 |
| Maleinimid MI | Gew.-% | 0,7 | 0,7 | 0,7 | 0,7 | 0,7 | - |
| Glasfaser CS 7916® | Gew.-% | 40 | 40 | 40 | 30 | 40 | 40 |
| ZnS | Gew.-% | 3 | 10 | 20 | 30 | - | 10 |
| Biegefestigkeit | MPa | 310 | 310 | 295 | 260 | 310 | 260 |
| Randfaserdehnung | % | 2,3 | 2,1 | 1,8 | 1,9 | 2,4 | 1,9 |
| Biege-E-Modul | GPa | 14 | 16 | 18 | 15 | 14 | 14 |
| Schlagzähigkeit | kJ/m² | 48 | 44 | 35 | 35 | 46 | 32 |

**Patentansprüche**

1. Mischungen aus
A) 90 bis 20 Gew.-%,
unverzweigten, sulfongruppenfreien Polyarylensulfiden,
B) 0,1 bis 20 Gew.-%,
eines Maleinimids der Formel (I) und/oder (II),

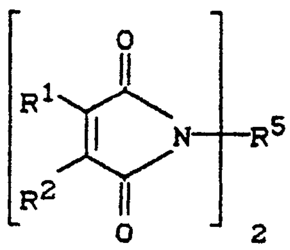

(I),

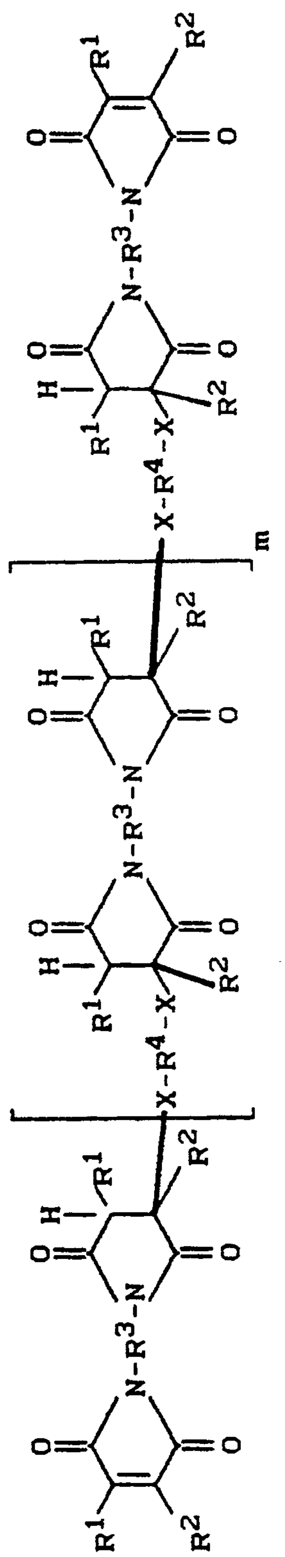

(II),

wobei

R[1] und R[2] gleich oder verschieden sein können und Wasserstoff, $C_1$-$C_{22}$-Alkyl, $C_6$-$C_{14}$-Aryl, oder $C_7$-$C_{22}$-Aralkyl oder $C_7$-$C_{22}$-Alkylaryl bedeuten,

R[3], R[4] und R[5] unabhängig voneinander divalente Reste, mit 1 bis 38 aliphatischen C-Atomen sind, die gegebenenfalls auch in Ringen angeordnet sein können und/oder divalente aromatische Reste mit 6 bis 24-C-Atomen sind und/oder divalente aromatisch-aliphatische und/oder aliphatisch-aromatische Reste mit 7 bis 40 C-Atomen sind, wobei gegebenenfalls zwei oder mehr aromatische, aliphatische Ringe durch eine chemische Bindung, ein Sauerstoffatom, ein Schwefelatom, eine Carbonylgruppe und/oder eine Sulfongruppe verknüpft sein können,

und

X für -NH oder $C_1$-$C_{10}$-N-Alkyl steht,

m für eine Zahl von 0 bis 1000 steht,

C) 0,3 - 40 Gew.-% Metallsalze,

D) 5 bis 40 Gew.-% Glasfasern und gegebenenfalls

E) 0,01 bis 40 Gew.-% bezogen auf die Summe (A + B + C + D) weiter Zusatzstoffe.

**2.** Verwendung von Mischungen nach Anspruch 1 zur Herstellung geformter Körper.

Europäisches Patentamt

# EUROPÄISCHER RECHERCHENBERICHT

Nummer der Anmeldung

EP 90 12 3381

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| P,X | EP-A-0 396 935 (BAYER) | | C 08 L 81/02<br>C 08 K 5/3415<br>C 08 K 3/30<br>C 08 K 3/20 |
| A | EP-A-0 275 991 (DAINIPPON) | | |
| Y | PATENT ABSTRACTS OF JAPAN, Band 12, Nr. 496 (C-555)[3343], 23. Dezember 1988;<br>& JP-A-63 205 357 (DAINIPPON INK) 24-08-1988<br>* Insgesamt * | 1-2 | |
| Y | EP-A-0 344 771 (PHILLIPS PETROLEUM)<br>* Ansprüche 16-26 * | 1-2 | |
| | | | RECHERCHIERTE SACHGEBIETE (Int. Cl.5) |
| | | | C 08 L<br>C 08 K |

Der vorliegende Recherchenbericht wurde für alle Patentansprüche erstellt

| Recherchenort | Abschlußdatum der Recherche | Prüfer |
|---|---|---|
| Den Haag | 13 Mai 91 | KLIER E.K. |

KATEGORIE DER GENANNTEN DOKUMENTE

- X : von besonderer Bedeutung allein betrachtet
- Y : von besonderer Bedeutung in Verbindung mit einer anderen Veröffentlichung derselben Kategorie
- A : technologischer Hintergrund
- O : nichtschriftliche Offenbarung
- P : Zwischenliteratur
- T : der Erfindung zugrunde liegende Theorien oder Grundsätze
- E : älteres Patentdokument, das jedoch erst am oder nach dem Anmeldedatum veröffentlicht worden ist
- D : in der Anmeldung angeführtes Dokument
- L : aus anderen Gründen angeführtes Dokument
- & : Mitglied der gleichen Patentfamilie, übereinstimmendes Dokument